# EUROPEAN PATENT SPECIFICATION

(11) **EP 0 566 679 B1**
(45) Date of publication and mention of the grant of the patent: **28.02.1996**
(21) Application number: 92904532.6
(22) Date of filing: 07.01.1992
(51) Int. Cl.: B32B 27/32, C09J 123/16

(54) **HEAT SEALABLE MULTILAYER POLYOLEFINIC FILM STRUCTURES**
HEISSIEGELBARE MEHRSCHICHTFOLIEN AUS POLYOLEFINEN
STRUCTURES DE FILMS POLYOLEFINIQUES MULTICOUCHES THERMOSOUDABLES

(30) Priority: 10.01.1991 US 639648
(43) Date of publication of application: 27.10.1993
(73) Proprietor: THE DOW CHEMICAL COMPANY, Midland, Michigan 48640 (US)
(72) Inventor: CHUM, Pak-Wing, S., Lake Jackson, TX 77566 (US); KOCH, Kaelyn, C., Lake Jackson, TX 77566 (US)
(74) Representative: Smulders, Theodorus A.H.J., Ir.
(86) International application number: PCT/US92/00221
(87) International publication number: WO 92/12010

(56) References cited:
- EP-A- 0 100 247
- US-A- 4 668 752
- US-A- 4 820 557
- US-A- 4 927 708

## Description

This invention relates to oriented multilayer, heat sealable thermoplastic film structures. More particularly, the invention relates to multilayer film structures which retain heat sealability even after irradiation.

Many polymers have been developed which can withstand exposure to irradiation, often incorporating specific additives or antioxidants which prevent polymer degradation. Films and multilayer films made from these and other polymers are sometimes exposed to irradiation during processing or use. For example, irradiation is used in some instances to destroy micro-organisms in the wrapped product (e.g., in food sterilization) and to also prepare at least one component of the film for thermal shrinkage at a later time.

Multilayer film packaging has many requirements for both enduring the irradiation exposure and preparing part of the structure for subsequent shrinkage. Typically, the package is a multilayer structure, with the different layers performing different functions. Usually the layers are made from thermoplastic polymers. For example, one layer may be a barrier layer (e.g., ethylene vinyl alcohol (EVOH)), the heat seal layer may be a polyethylene (e.g., linear low density polyethylene (LLDPE)), while still another type of polyethylene (e.g., high density polyethylene (HDPE)) might be used as the structural or core layer.

Irradiation of multilayer film structures can be done by exposure to Cobalt 60 (gamma irradiation) or by electron beam (beta). When the entire multilayer film structure is irradiated, the heat sealability of the heat seal layer often decreases (i.e., the intiation temperature of the heat sealing increases), especially when the heat seal layer is polyethylene, while the physical properties (e.g., strength) of the structural layer increase. Reduction in heat sealability causes lower heat seal strengths and narrower heat sealing temperature ranges. Exposure to irradiation, especially beta irradiation, and subsequent exposure to heat can also cause the core layer and the heat seal layer to shrink, especially when the multilayer structure has been oriented (e.g., film). Controlled shrinkage of the core layer is desirable, but a narrower heat sealing temperature range of the heat seal layer is not desirable.

Irradiation of the heat seal layer also results in higher heat seal initiation temperatures as well as narrower heat seal temperature ranges. The narrow heat seal range of the heat seal layer can cause the wrapped product to become exposed to the external environment and contamination, thus negating the sterilizing effects of irradiation.

USP 4,927,708 (Herran et al.) discloses an improvement in multilayer thermoplastic film having at least 5 layers wherein a core layer comprises a very low density polyethylene, intermediate layers adjacent each side of the core layer comprising a linear low density polyethylene and two outer layers each bonded to the respective intermediate layer comprising a very low density polyethylene. The very low density polyethylene can have a density between 0.890 and 0.915 grams/cubic centimeter (g/cm³). There is no disclosure as to the molecular weight distribution, nor is there any reference to the short chain branching distribution of any of the layers.

USP 4,798,081 (Hazlitt et al.) discloses a method and apparatus for analyzing a solution of a crystalline or semi-crystalline polymer sample (e.g., polyethylene). The analysis includes temperature rising elution fractionation (TREF) which measures the degree of branching of select fractions of the polymer sample.

USP 4,755,419 (Shah) discloses a 7-layer coextruded oriented film comprising a core layer of ethylene-vinyl alcohol copolymer, two intermediate layers each comprising a polyamide, two outer layers each comprising a blend of polymeric materials and two layers each comprising an adhesive polymeric material. The blend of polymeric materials are taken from the group consisting of (i) a blend of linear low density polyethylene, a linear medium density polyethylene and an ethylene vinyl acetate copolymer and (ii) a blend of an ethylene propylene copolymer and a polypropylene.

USP 4,724,185 (Shah) discloses a coextruded multiple layer oriented film. The core layer comprises a cross-linked blend of ethylene vinyl alcohol copolymer and polyamide. Two cross-linked interior layers each comprising adhesive resins and two cross-linked outer layers each comprising a 3 component blend of linear low density polyethylene, linear medium density polyethylene and ethylene-vinyl acetate, are each included in the multiple layer film.

USP 4,668,752 (Tominari et al.) discloses ethylene/C₄-C₂₀ alpha-olefin copolymers which have new characteristics in regards to composition distribution. degree of branching, randomness and crystallinity. The ethylene copolymers have various properties, including a melt flow rate of from 0.01 to 200 g/10 minutes, a molecular weight distribution measured as Mw/Mn of 2.5 ≦ Mw/Mn ≦ 10, a density of from 0.850 to 0.930 g/cm³, the amount of components having a degree of branching of not more than 2/1000 carbons of not more than 10 percent by weight based on the ethylene copolymer and the amount of components having a degree of branching of at least 30/1000 carbons of not more than 70 percent by weight based on the ethylene copolymer. The disclosure alleges that the ethylene copolymers made using this invention have excellent mechanical properties, optical properties, blocking resistance, heat resistance and low temperature heat sealability in a well balanced combination. Tominari et al. do not specify how the ethylene/C₄-C₂₀ alpha-olefin copolymers perform when exposed to irradiation, much less how they perform when in a multilayer structure that is exposed to irradiation.

USP 4,640,856 (Ferguson et al.) discloses multi-layer thermoplastic shrink film having improved shrink, toughness and barrier properties achieved by a substrate layer of very low density polyethylene and a gas barrier layer of vinylidene chloride copolymer or ethylene-vinyl alcohol. The very low density polyethylene can have a density of less than 0.910 g/cm³ and as low as 0.860 g/cm³or even lower. there is no disclosure as to the molecular weight distribution, nor is there any reference to the short chain branching distribution of the substrate layer.

USP 4,352,849 (Mueller) discloses multilayer heat shrinkable packaging film comprising a core layer consisting essentially of an ethylene-propylene copolymer blended with an ethylene-vinyl acetate copolymer and a skin or surface layer comprising an ethylene-propylene copolymer.

USP 4,064,296 (Bornstein et al.) discloses a multi-layer packaging film having low oxygen permeability comprising two polymeric layers, at least one of which is cross-linked, and a layer between the polymeric layers comprising a hydrolyzed ethylene vinyl acetate copolymer. The two polymeric layers can comprise polyethylene, although the type of polyethylene is not specified.

USP 4,820,557 (Warren) discloses a packaging film comprising at least one layer of a linear copolymer of ethylene and an alpha-olefin with a density of about 0.935 g/cm³ or less and a low I₁₀/I₂ ratio. The film allegedly has better abuse resistance as compared with a film made with a linear ethylene/alpha-olefin copolymer having a comparatively higher I₁₀/I₂ value. Warren is directed to use of polyethylene which has a narrow molecular weight distribution in order to improve abuse resistance of multilayer structures. Warren specifically teaches away from the use of polyethylene having a broad molecular weight distribution (i.e., higher I₁₀/I₂ values) in multilayer film structures.

In spite of these advances, a better balance of heat seal and shrinkage properties of the overall structure is still needed before and after irradiation so that the overall integrity of the package is not lost after irradiation.

A multilayer heat-sealable thermoplastic film structure has now been discovered that has improved heat seal performance after irradiation. The novel multilayer film structure comprises at least one heat sealable outer layer (A) and at least one core layer (B).

Layer (A) of the multilayer thermoplastic film structure comprises a first linear polyethylene characterized as having:
(a) a density from 0.88 grams/cubic centimeter (g/cm³) to 0.92 g/cm³,
(b) a melt index, measured as I₂, from 2 grams/10 minutes to 20 grams/10 minutes,
(c) a molecular weight distribution, measured as I₁₀/I₂, from 5 to 8, and wherein
(d) 15 percent by weight or less of said linear polyethylene has a degree of branching less than or equal to 2 methyls/1000 carbons, and
(e) 25 percent by weight or less of said linear polyethylene has a degree of branching equal to or greater than 25 methyls/1000 carbons.

Layer (B) comprises a second linear polyethylene characterized as having:
(a) a density from 0.88 g/cm³, to 0.94 g/cm³,
(b) a melt index, measured as I₂, from 0.05 grams/10 minutes to 5 gram/10 minutes,
(c) a molecular weight distribution, measured as I₁₀/I₂, from 8 to 30.

Figure 1 shows the preparative scale temperature rising elution fractionation apparatus used to determine the branching distribution in the polymer fractions.

Figure 2 plots heat seal strength (measured in Newton/cm (Newtons/inch)) versus heat seal temperature (in °C (in °F)) of three ultra low density polyethylene (ULDPE) resins made into film.

Figure 3 plots cross-link density (measured in percent gel) versus radiation dosage (in megarads) of two ULDPE resins made into film.

Figure 4 plots heat seal strength (measured in Newton/cm (Newtons/inch)) versus heat seal temperature (in °C (in °F)) of Resin C made into film after different levels of exposure to irradiation.

Figure 5 plots heat seal strength (measured in Newton/cm (Newtons/inch)) versus heat seal temperature (in °C (in °F)) of Resin B made into film after different levels of exposure to irradiation.

Figure 6 plots cross-link density (measured in percent gel) versus radiation dosage (in megarads) of one LLDPE resin made into film.

Figure 7 depicts one multilayer film structure of the present invention.

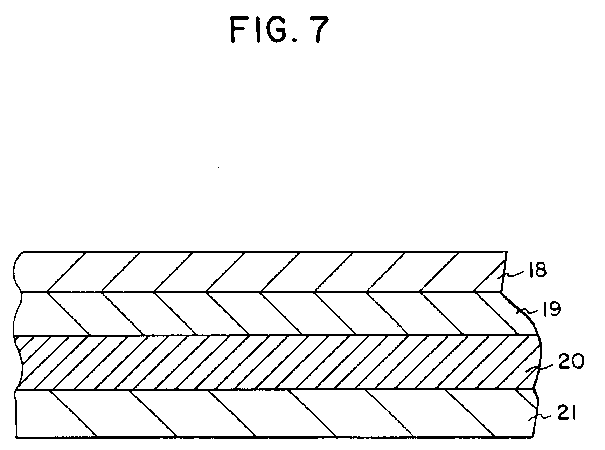

The multilayer structures of the present invention comprise at least one heat-sealable outer layer and at least one core layer. The multilayer structure can have many layers, but the heat-sealable layer of the present invention must be on at least one outer surface of the structure to take advantage of the improvement in heat seal characteristics. Typical multilayer structures can be made using a coextruded blown or cast film process. Figure 7 shows a multilayer structure of the present invention. The structures of the film product can generally be described as an A/B/D/X multilayer structure wherein layer A (18) is the heat sealable outer layer, layer B (19) is the core layer and layers D (20) and/or X (21) are a tie layer(s) and/or a barrier layer(s). The core layer (19) can be adjacent to the heat seal layer, but does not have to be. The multilayer film structure is comprised of from 2 to 20 layers, preferably from 2 to 7 layers.

The multilayer film structure can be irradiated at any point during the process. For example, the heat-sealable outer layer and the core layer of the present invention can be coextruded, irradiated and subsequently laminated and oriented (i.e., stretched) to make the final multilayer film structure, so long as the heat-sealable outer layer is on at least one outer surface of the structure. Conversely, the entire multilayer structure can be formed and oriented, and then subsequently irradiated. The order of the steps of orientation and irradiation is not critical. Irradiation is preferably accomplished by using an electron beam (beta) irradiation device at a dosage level of from 0.5 megarad (Mrad) to 20 Mrad.

Thickness of the multilayer film structures can vary from 0.1 mil to 50 mils (.0025 mm to 1.3 mm), preferably from 0.5 mils to 10 mils. (.013 mm to .25 mm). The tie layer(s) and/or the barrier layer(s) are made from conventional thermoplastic polymers known to be useful for this purpose, especially polyolefinic polymers.

Thermoplastic polymers useful as the tie layer(s) include ethylene acrylic acid interpolymers (e.g., U.S. Patent 4,599,392), ethylene methacrylic acid interpolymers (e.g., U.S. Patent 4,248,990 and U.S. Patent 4,252,924), succinic acid or succinic anhydride grafted polyolefins and blends with ungrafted polyolefins (e.g., U.S. Patents 4,684,576, 4,741,970 and 4,394,485), vinyl acetate interpolymers. Thermoplastic polymers useful for the barrier layer(s) include EVOH, polyvinyl chloride, polyvinylidene chloride, and nylon.

The heat-sealable outer layer and the core layer of the present invention are fabricated from linear polyethylene. Manufacture of linear polyethylene is disclosed, e.g., in U.S. Patent 4,076,698 and involves coordination catalysts of the "Ziegler" type or "Phillips" type and includes variations of the Ziegler type, such as the Natta type. These catalysts may be used at very high pressures, but may also (and generally are) used at very low or intermediate pressures. The products made by these coordination catalysts are generally known as "linear" polymers because of the substantial absence of branched chains of polymerized monomer units pendant from the main polymer "backbone." It is these linear polymers to which the present invention pertains. Linear low density polyethylene (LLDPE) and ultra low density polyethylene (ULDPE) typically have a density between about 0.88 g/cm³ and about 0.94 g/cm³. The density of the polyethylene is lowered by copolymerizing ethylene with minor amounts of an alpha, beta-ethylenically unsaturated alkene(s) having from 3 to 20 carbons per alkene molecule (e.g., 1-propene, 1-butene, 1-pentene, 4-methyl-1-pentene, 1-hexene, 1-octene, 1,9-decadiene and 1,7-octadiene), preferably 4 to 8 carbon atoms (e.g., 1-butene, 1-hexene and 1-octene) and most preferably 8 carbons per alkene molecule (i.e., 1-octene). The amount of the alkene comonomer is generally sufficient to cause the density of the linear low density polymer to be substantially in the same density range as LDPE, due to the alkyl side chains on the polymer molecule, yet the polymer remains in the "linear" classification; they are conveniently referred to as "linear low density polyethylene." These polymers retain much of the strength, crystallinity, and toughness normally found in HDPE homopolymers of ethylene, but the higher alkene comonomers impart high "cling" and "block" characteristics to extrusion or cast films and the high "slip" characteristic inherently found in HDPE is diminished.

The use of coordination-type catalysts for copolymerizing ethylene with higher alkenes to make LLDPE and ULDPE copolymers having densities between about 0.88 g/cm³ and about 0.94 g/cm³ is disclosed variously in, e.g., U.S. 2,699,457; U.S. 2,846,425; U.S. 2,862,917; U.S. 2,905,645; U.S. 3,058,963; U.S. 4,076,698; and U.S. 4,668,752. The density of the linear polyethylene useful in the heat sealable outer layer (A) in the present invention is from 0.88 g/cm³ to 0.92 g/cm³, preferably from 0.89 g/cm³ to 0.915 g/cm³. The density of the linear polyethylene useful in the core layer (B) in the present invention is from 0.88 g/cm³to 0.94 g/cm³, preferably from 0.9 g/cm³ to 0.93 g/cm³.

The molecular weight of the LLDPE useful in the present invention is indicated and measured by melt index according to ASTM D-1238, Condition (E) (i.e., 190°C/2.16 kilograms); also known as I₂. The I₂ of the linear polyethylene used in the heat sealable outer layer (A) can be as low as 0.5 grams/10 minutes, but is preferably from 2 grams/10 minutes (g/10 minutes) to 20 g/10 minutes, more preferably from 3 g/10 minutes to 10 g/10 minutes. The I₂ of the linear polyethylene used in the core layer (B) can be from 0.05 g/10 minutes to 5 g/10 minutes, preferably from 0.2 g/10 minutes to 1 g/10 minutes.

The molecular weight distribution is indicated and measured by I₁₀/I₂ according to ASTM D-1238, Conditions (N) (190°C/10 kilograms) and (E), respectively. The I₁₀/I₂ of the heat sealable outer layer (A) can be from 5 to 8, preferably from 6.5 to 8. The I₁₀/I₂ of the core layer (B) can be from 8 to 30, preferably from 8 to 15. Molecular weight distribution can be achieved by varying catalytic conditions, reactor conditions or feed percentages. Blends of polyethylenes can also be used. Such blends can be prepared by blending separate and discrete polyethylene polymers, or polymerizing the polyethylene polymer in-situ in multiple reactors, (e.g. the technique disclosed in U.S. Patent 3,914,342). It is important that the linear polyethylene(s) be well mixed when using discrete polymer blends.

Additives, (e.g., anti-oxidants, pigments, hydrophobic and/or hydrophilic agents. etc.), may be incorporated into the linear polyethylene to the extent that they do not interfere with the heat sealability of the outer layer and the shrinkability of the core layer after orientation and exposure to irradiation.

Short chain branching distribution (SCBD) of the polymer fractions of the polyethylene polymers useful in the heat seal layer and the core layer is measured according to the temperature rising elution fractionation (abbreviated herein as "TREF") technique described herein and in U.S. Patent 4,798,081.

### Experimental Procedure for Determining Short Chain Branching Distribution:

### I. TREF Device Design

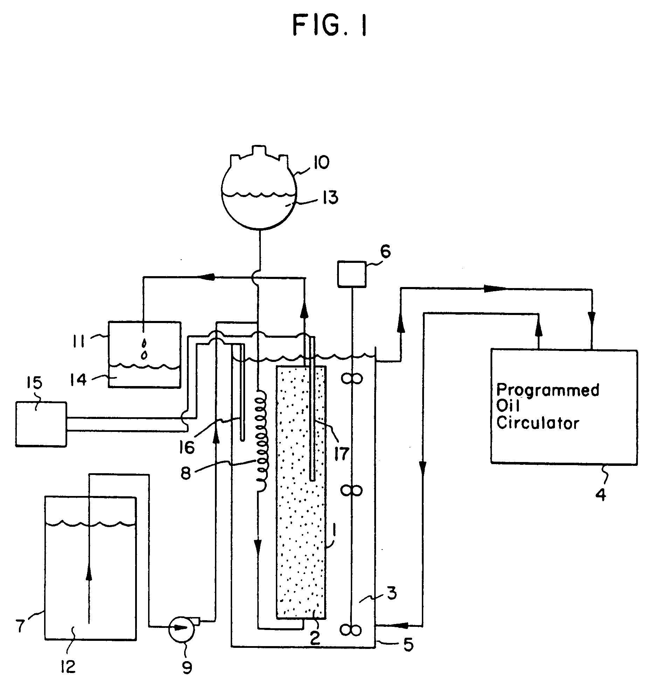

A diagram of the TREF apparatus is shown in Figure 1. The column (1) is 4 inches (10 cm) in diameter and 29 inches (74 cm) in length, a size easily capable of fractionating up to 20 grams of sample. The column is packed with stainless steel shot (2) and heated by a circulating oil bath (3). The entire apparatus is enclosed within a hood (not shown) to contain any solvent or heating oil vapors.

### A. Column Construction

The column is constructed of 4 inch (10 cm) schedule 40 steel pipe. Legs of one inch (2.5 cm) angle iron were welded on the pipe to keep it in a vertical position. The end caps are welded on the pipe to prevent any solvent leakage into the oil system. A one inch (2.5 cm) hole is left in each end to allow for packing of the column and to accomodate a 1 inch MPT (2.5 cm) x 1/4 inch (0.6 cm) tubing connection.

### B. Column Packing

The column is tightly packed with 0.028 inch (.07 cm) diameter stainless steel shot. The interstitial volume of the column is approximately 1700 milliliters. Stainless steel shot effectively prevents channeling and provides good heat transfer through the column.

### C. Heating System

The column temperature is regulated by a Haake N3B circulating bath controlled by a Haake PG-20 temperature programmer (4). The oil used is Primol 355 mineral oil or a light silicon oil. The 10 gallon (38 l) insulated bath (5) containing the column is galvanized steel. The oil circulator injects oil at the bottom of this bath with the return from the top. An air driven motor (6) is used for agitation of the large oil bath.

### D. Solvent System

The solvent used is 1, 2, 4-trichlorobenzene (TCB) (12). It is pumped from a reservoir (7) into the bottom of the column through a preheating coil (8) located in the large bath. The solvent is pumped at a flow rate of approximately 40 ml/minute using a Fluid Metering, Inc. lab pump (9) designated RP-G-150 with a 2-SSY (3/8 inch or 0.95 cm) stainless steel pump head module. This pump allows control of flow rates from 1 to 100 milliliters/minute.

### E. Column Loading System

Polymer samples (13) are loaded on the column utilizing a gravity flow method. The sample is first dissolved in 1700 ml of TCB in a heated 5 liter flask (10). The 130°C column is then loaded with the solution, also at 130°C. One hundred milliliters of clean solvent is then heated and added to flush all transfer lines. These lines are heated with rheostat controlled heat tape (not shown).

### F. Fraction Collection

The column eluent (14) is collected in one gallon metal cans (11). Acetone is then added to the cans to precipitate the polymer. Fraction work-up will be discussed in a later section.

### II. Fractionation Procedure and Column Operation

### A. Loading the Column

The polymer sample (about 20 grams) is dissolved in 1700 ml of TCB in a heated 5 liter flask. Approximately 3 to 4 hours is required to carry out this step. The column, the flask, and all transfer lines must be above 120°C to insure that no polymer is precipitated during the loading step. After the polymer solution is deposited on the column, a wash of fresh solvent is used to eliminate all polymer from the transfer lines. The amount of wash is dependent on the volume of the transfer lines (about 100 ml for this system). After completing these steps, the entire system must be brought back down to room temperature, with the rate of cooling being the most critical step in the fractionation procedure. The rates for this system are between 1°C and 2°C/hr. A temperature recorder (15) equipped with a thermocouple (16) in the recirculating oil and a thermocouple (17) in the packed column is used to monitor the temperature changes. During the cooling step the polymer selectively crystallizes allowing for efficient fractionation during the elution step. There is no solvent flow through the column during the cooldown step.

### B. Column Elution

Elution of the polymer from the column is started at room temperature with a predetermined temperature rise rate. Solvent flows continuously during this step and fractions are collected over the desired change in temperature (5°C for this work). The temperature rise rate used here is 6°C/hr. The temperature rise can be achieved in two ways, stepwise or continuous. Solvent flow rates (40 ml/min) are chosen to achieve one interstitial column volume over the desired change in temperature. These rates result in a fraction collection every 50 minutes. Approximately 15 fractions are collected for each sample.

### C. Fraction Work-Up

The fractions are mixed about 1:1 with acetone and allowed to sit for at least one day to precipitate the polymer. The polymer-TCB-acetone mixture is then added to a large separatory funnel, and allowed to sit for several minutes until the polymer rises to the top. The bulk of the solvent is then drained and more acetone added to wash the polymer. The acetone-polymer mixture is then vacuum filtered, and the resulting polymer sample dried in a vacuum oven at 80-90°C followed by weighing. These samples can then be directly used for gel permeation chromatography, differential scanning calorimetry, and infrared analysis.

### D. Branching Content Determination

Branching content (i.e., degree of branching) is calculated from CH₃/1000 C (methyls/1000 carbons) determination according to ASTM method D2238-68. A Beckman 4260 infrared spectrophotometer is employed, using films of approximately 0.15 mm thickness. A correction for chain end methyl groups is necessary for accurately determining weight percent comonomer (e.g., 1-octene) incorporation. The correction is done according to the following equation:${\text{Corrected CH}}_{\text{3}} {\text{/1000C = Uncorrected CH}}_{\text{3}} \text{/1000C +} \frac{\text{Vinyl}}{\text{1000}} \text{-} \frac{\text{2800}}{\text{Mn}}$ Comonomer incorporation can be determined from the following equation:$\text{Wt.% octene =} \frac{{\text{(Molecular Weight of 1-octene)(Corrected CH}}_{\text{3}} \text{/1000C)(100)}}{{\text{14000 + 84(corrected CH}}_{\text{3}} \text{/1000C)}}$

### E. Molecular Weight Determination

Number average molecular weight (Mn) is measured by using a Waters Model 150C Gel Permeation Chromatograph. The measurements are made by dissolving polymer samples in hot, filtered, 1, 2, 4 trichlorobenzene (TCB). The GPC (Gel Permeation Chromatography) runs are made at 140°C in TCB. A flow rate of 1.0 ml/min is used and the columns used are 3 Polymer Laboratories 10 micron linear columns. Each column diameter is 7.5 mm and the column length is 30 cm. Column performance is typically around 30,000 plates/meter as determined using 0.02 grams eicosane in 50 milliliters of TCB. Columns are disposed of if the plate count is below 20,000 plates per meter. Column performance is also monitored using the multiplied product of the spreading factor "σ" and the slope of the calibration curve "D". This value is typically around 0.081. Columns with values above 0.09 for the multiplied factor "Dσ" are not employed. The antioxidant butylated hydroxytoluene is added to the TCB at a concentration of 250 parts per million. The system is calibrated using narrow molecular weight polystyrene standards. The following formula is used to transform polystyrene molecular weights to polyethylene molecular weights:$\text{Mw of polyethylene = (0.4316) (Mw of polystyrene)}$ The polyethylene samples are prepared at a concentration of 0.25 grams of polyethylene in 50 milliliters of TCB. The volume injected is 100 microliters.

### F. Infrared Determination of Vinyl Content

A Perkin-Elmer Infrared (IR) Model 760 is used to measure vinyl groups in the polymer chains. The polymer is compression molded into a thin film and measured for thickness (target is approximately 0.1-0.3 mm thick). The IR absorbancy spectrum is measured for each film and vinyl group content is calculated according to the following equation:$\text{Vinyl Groups / 1000 Carbons in the polymer chain =} \frac{\text{IR Absorbance at λ}}{\text{(t) (k)}}$ where:
t=thickness
k=0.970 and λ=909 cm⁻¹.
The vinyl groups/1000 carbons value obtained is inserted into the equation for determining corrected CH₃/1000 carbons for each polymer fraction as described earlier in Section D in this disclosure.

The first linear polyethylene suitable for use as the heat seal layer (A) in the present invention has a degree of branching less than or equal to 2 methyls/1000 carbons in 15 percent by weight or less, more preferably 10 percent by weight or less, of the linear polyethylene and a degree of branching equal to or greater than 25 methyls/1000 carbons in 25 percent by weight or less, more preferably 20 percent by weight or less, of the first linear polyethylene.

### Example 1

This example demonstrates heat seal performance of three ULDPE Resins with different short chain branching distributions (SCBD).

ATTANE* 4002 ULDPE (labeled as Resin A), an ethylene/octene-1 copolymer made by The Dow Chemical Company, having I₂ = 3.3 grams/10 minutes, I₁₀/I₂ = 7.7 and density of about 0.912 g/cm³ and ATTANE* 4001 ULDPE (labeled as Resin B), also an ethylene/octene-1 copolymer made by The Dow Chemical Company, having I₂ = 1.0 gram/10 minute, I₁₀/I₂ = 8.2 and density of about 0.912 g/cm³, another ULDPE resin (labeled as Resin C), also an ethylene/octene-1 copolymer, having I₂ = 3.3 grams/10 minutes, I₁₀/I₂ = 7.7 and density of about 0.912 g/cm³ and an octene-1 LLDPE copolymer (labelled as Resin D) having I₂ = 0.55 grams/10 minutes, I₁₀/I₂ = 12 and density of about 0.923 g/cm³ were made into single layer cast film and evaluated for heat seal performance. Each film sample was heat sealed and then tested for heat seal strength.

Resins A and B had similar short chain branching distributions but differed in I₂ and I₁₀/I₂. Resin C had a "narrower" short chain branching distribution as compared to Resins A and B as measured using TREF, since about 8.5 percent (total weight basis) of Resin C had a degree of branching of less than or equal to 2 methyls /1000 carbons and about 18.5 percent (total weight basis) of Resin C had a degree of branching of greater than or equal to 25 methyls /1000 carbons. The physical properties of the resins used in all of the experiments described herein (Resins A, B, C and D) are summarized in Table 1.

**TABLE 1**

| Resin Physical Properties | | | | | |
|---|---|---|---|---|---|
| RESIN | I₂ (grams/10 minutes) | I₁₀/I₂ | Density (g/cm³) | Weight Percent polymer fraction having a degree of branching of ≦ 2 methyls /1000 carbons | Weight Percent polymer fraction having a degree of branching of ≧ 25 methyls /1000 carbons |
| A | 3.3 | 7.7 | 0.912 | 16.5 | 27 |
| B | 1.0 | 8.2 | 0.912 | 16.5 | 27 |
| C | 3.3 | 7.7 | 0.912 | 8.5 | 18.5 |
| D | 0.55 | 12 | 0.923 | NM | NM |
| NM = Not Measured | | | | | |

Samples of single layer 0.025 mm (1 mil) thick films were fabricated from Resins A, B and C using a cast film line equipped with a Modern Plastics Machinery (MPM) extruder with a 2 inch (5 cm) screw (L/D=24:1) a 12 inch (30 cm) cast film die and a MPM cast film take-up system with a 18 inch (46 cm) chrome plate chill roll and an air knife to cool the polymer melt. The fabrication conditions of the cast film are listed in Table 2.

**TABLE 2**

| Fabrication Conditions for Samples | |
|---|---|
| Extruder Zone 1 (°C) | 200 |
| Extruder Zone 2 (°C) | 240 |
| Extruder Zone 3 (°C) | 240 |
| | |
| Die Temperature (°C) | 240 |
| | |
| Melt Temp. (°C) | 240 |
| | |
| Chill Roll (°C) | 12 |
| | |
| Extruder (rpm) | 80 |
| | |
| Film Gauge (mils) | 1 (.025 mm) |
| | |
| Extruder Back Pressure (psi) | 1850 (12.7 MPa) |
| | |
| Line Speed (feet/minute) | 60 (18 m/min) |
| | |
| Through put (lbs/hr) | 40 (18 kg/hr) |
| Die Width (inches) | 12 (30 cm) |
| Film Width (inches) | 8 (20 cm) |
| Die Gap (mils) | 8 (0.2 mm) |

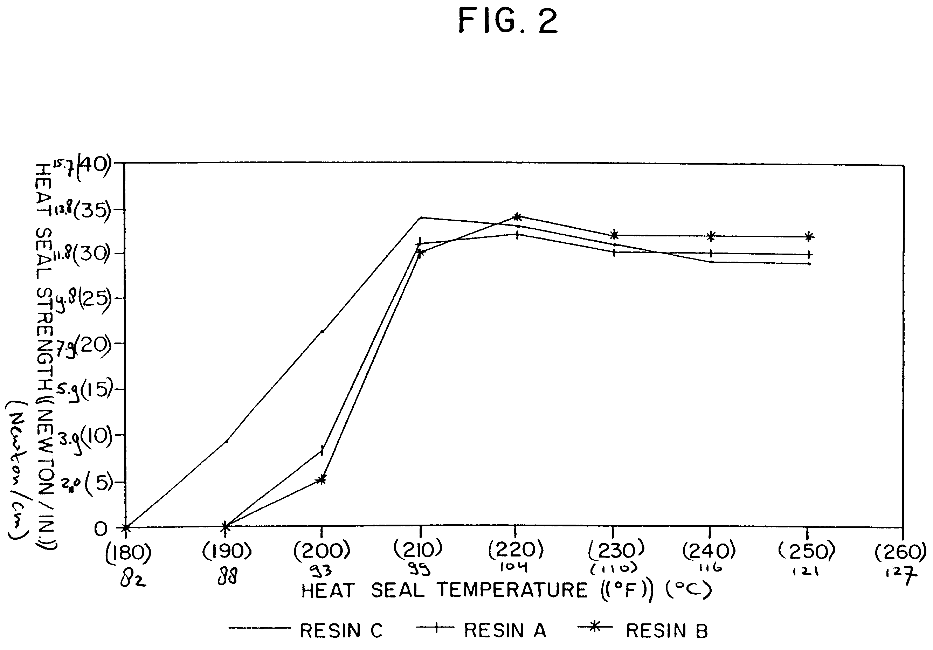

The cast film samples were compared for heat seal performance and heat seal strength using an Instron peel test. Film samples for heat seal testing were conditioned as described in ASTM E 171-82 (i.e., 73.4 +/- 3.6 °F (21-25°C), 50+/- 5 percent relative humidity). The heat seal tests were performed utilizing a heat sealer. A variety of equipment exists for this function, such as a Sentinel Heat Sealer, a Theller Precision Heat Sealer and a Packforsk Hot Tack Tester (made by Top Wave). The conditions for sealing were typically 0.5 second dwell time, 40 psi (275 kPa) bar pressure. Both bars were heated. One inch (2.5 cm) wide by six inch (15 cm) long strips were used for testing. After sealing, the samples were conditioned at the ASTM conditions described above for about 24 hours. The heat seal tests were made using an Instron tensiometer at a constant crosshead speed of about 2 inches/minute (5 cm/minute) in a 90° "T-peel" mode. Three to five heat seal tests were made and tested. The results were averaged and are illustrated in Figure 2 and the data are summarized in Table 3.

Resin C had a "narrower" SCBD and exhibited an improved heat seal performance (i.e., lower heat seal initiation temperature and higher seal strength at below 99°C (210°F)) as compared to Resin A and Resin B. Resin C is thus an example of this invention and can be used as a heat seal layer in a multilayer film structure.

**TABLE 3**

| Heat Seal Strength of Resins A, B, AND C | | | |
|---|---|---|---|
| Heat Seal Temperature (°F) ((°C)) | Heat Seal Strength (Newtons/inch) ((Newton/cm)) | | |
| | Resin A* | Resin B* | Resin C** |
| 180 (82°C) | 0 | 0 | 0 |
| 190 (88°C) | 0 | 0 | 9 (3.5 N/cm) |
| 200 (93°C) | 8 (3.1 N/cm) | 5 (2 N/cm) | 21 (8.3 N/cm) |
| 210 (99°C) | 31 (12.2 N/cm) | 30 (11.8 N/cm) | 34 (13.4 N/cm) |
| 220 (104°C) | 32 (12.6 N/cm) | 34 (13.4 N/cm) | 33 (13 N/cm) |
| 230 (110°C) | 30 (11.8 N/cm) | 32 (12.6 N/cm) | 31 (12.2 N/cm) |
| 240 (116°C) | 30 (11.8 N/cm) | 32 (12.6 N/cm) | 29 (11.4 N/cm) |
| 250 (121°C) | 30 (11.8 N/cm) | 32 (12.6 N/cm) | 29 (11.4 N/cm) |

| | | | |
|---|---|---|---|
| * Comparative Example - not an example of present invention | | | |
| ** Inventive Example - Resin C can be used as a heat seal layer in the inventive multilayer film of the invention | | | |

### Example 2

This example demonstrates heat seal performance of electron beam irradiated ULDPE.

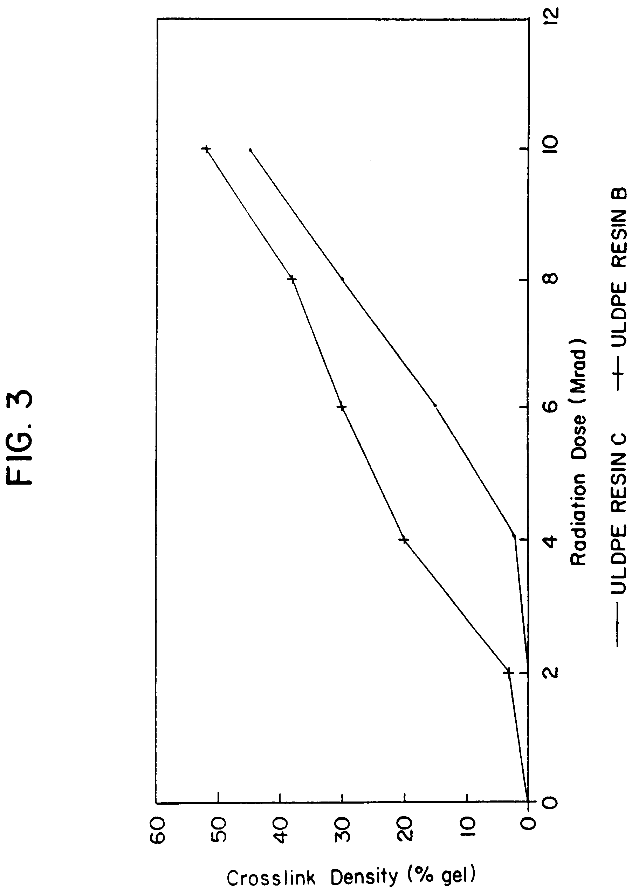

Resin B and Resin C were evaluated for heat seal performance and cross-link density (measured by percent gel) prior to and after electron beam irradiation. An Energy Science Inc. Model EC 200 electron beam radiation machine was used for the radiation treatment. The crosslink density (percent gel in xylene, measured by ASTM method D-2765) indicates the resins' propensity for heat seal performance. The cross-link densities of the resins before and after various doses of radiation treatment are illustrated in Figure 3 and the data are summarized in Table 4. As the data show, resin C can be exposed to about 5 megarads (Mrad) and still maintain a cross-link density of less than about 10 percent gel and thus is an example of this invention. Resin B reached a cross-link density of about 10 percent gel in less than about 3 Mrad exposure and is not an example of this invention for use in the heat seal layer.

**TABLE 4**

| Crosslink Density of Irradiated ULDPE (Resin B and Resin C) | | |
|---|---|---|
| Radiation Dose (Mrad) | Crosslink Density (Percent Gel) | |
| | Resin B* | Resin C** |
| 0 | 0 | 0 |
| 2 | 3 | 0 |
| 4 | 20 | 2 |
| 6 | 30 | 15 |
| 8 | 38 | 30 |
| 10 | 52 | 45 |

| | | |
|---|---|---|
| * Comparative Example - not an example of present invention | | |
| ** Inventive Example - Resin C can be used as a heat seal layer in the inventive multilayer film of the invention. | | |

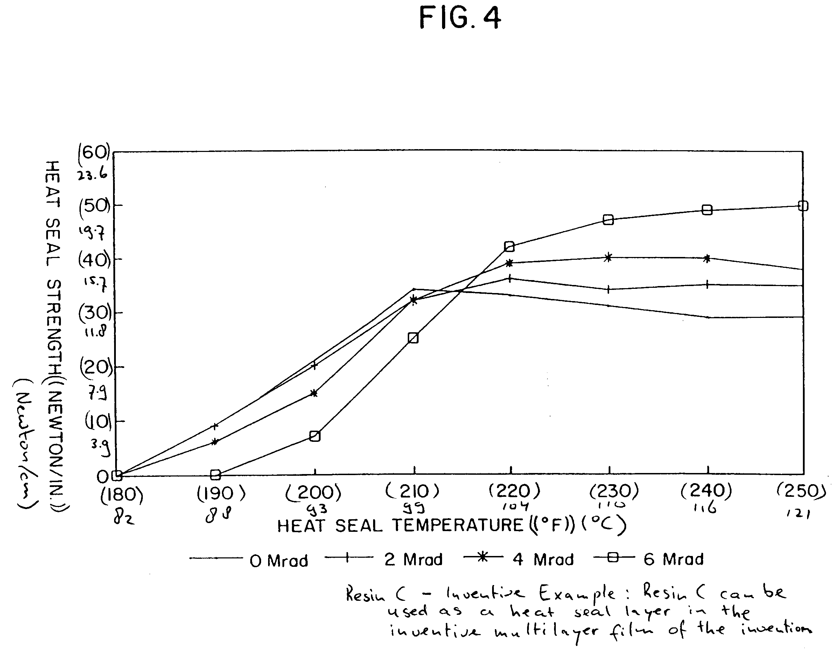

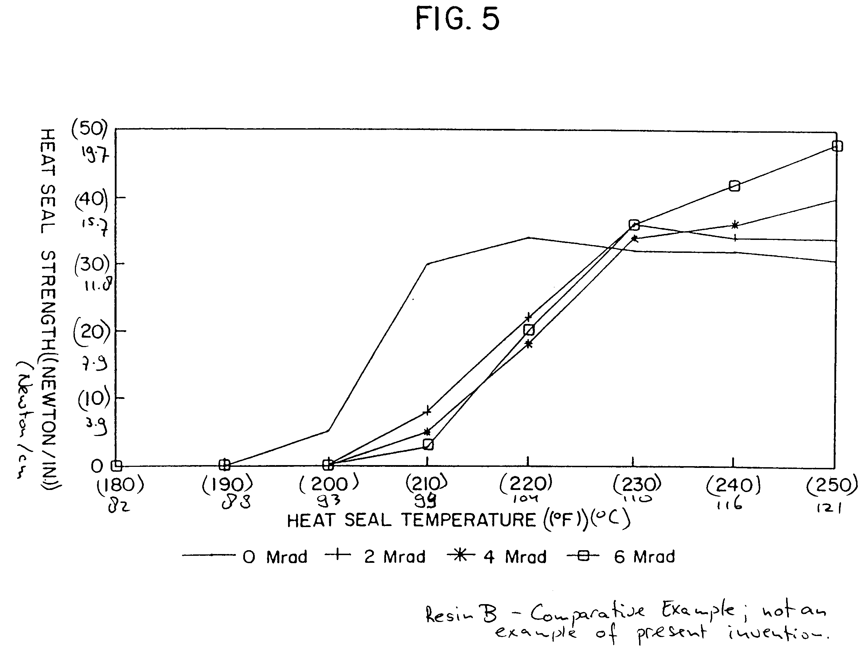

The heat seal performance of Resin B and Resin C prior to and after the radiation treatment was evaluated by the method described in Example 1. The results are illustrated in Figures 4 and 5 and the data are summarized in Tables 5 and 6. The data illustrate that Resin C retained good heat seal performance (i.e., a broad temperature bonding window yielding good heat seal values) even after electron beam radiation treatment of up to about 4 Mrad of radiation dosage. As Figure 4 shows, after an irradiation exposure of about 4 Mrad, Resin C achieved a heat seal strength of about 10 Newtons/inch (4 Newtons/cm) or more at a heat seal temperature as low as about 195°F (91°C). Resin C is thus an example of this invention for use in the heat seal layer of a multilayer structure demonstrating good heat seal at low temperatures after irradiation.

However, for Resin B, heat seal performance deteriorated significantly. After about 4 Mrad irradiation dosage, Resin B achieved a heat seal strength of about 10 Newtons/inch (4 Newtons/cm) only after heat sealing at a temperature of about 215°F (102°C) or more.

**TABLE 5**

| Heat Seal Strength of Resin C after Irradiation Treatment | | | | |
|---|---|---|---|---|
| Seal Temperature (°F) ((°C)) | Heat Seal Strength after Irradiation* (Newtons/inch) ((N/cm)) | | | |
| | 0 Mrad | 2 Mrad | 4 Mrad | 6 Mrad |
| 180 (82°C) | 0 | 0 | 0 | 0 |
| 190 (88°C) | 9 (3.5 N/cm) | 9 (3.5 N/cm) | 6 (2.4 N/cm) | 0 |
| 200 (93°C) | 21 (8.3 N/cm) | 20 (7.9 N/cm) | 15 (5.9 N/cm) | 7 (2.8 N/cm) |
| 210 (99°C) | 34 (13.4 N/cm) | 32 (12.6 N/cm) | 32 (12.6 N/cm) | 25 (9.8 N/cm) |
| 220 (104°C) | 33 (13 N/cm) | 36 (14.2 N/cm) | 39 (15.4 N/cm) | 42 (16.5 N/cm) |
| 230 (110°C) | 31 (12.2 N/cm) | 34 (13.4 N/cm) | 40 (15.7 N/cm) | 47 (18.5 N/cm) |
| 240 (116°C) | 29 (11.4 N/cm) | 35 (13.8 N/cm) | 40 (15.7 N/cm) | 49 (19.3 N/cm) |
| 250 (121°C) | 29 (11.4 N/cm) | 35 (13.8 N/cm) | 38 (15 N/cm) | 50 (19.7 N/cm) |

| | | | | |
|---|---|---|---|---|
| * Inventive Example - Resin C can be used as a heat seal layer in the inventive multilayer film of the invention. | | | | |

**TABLE 6**

| Heat Seal Strength of Resin B after Irradiation Treatment | | | | |
|---|---|---|---|---|
| Heat Seal Temperature (°F) ((°C)) | Heat Seal Strength after Irradiation* (Newtons/inch) ((Newton/cm)) | | | |
| | 0 Mrad | 2 Mrad | 4 Mrad | 6 Mrad |
| 180 (82°C) | 0 | 0 | 0 | 0 |
| 190 (88°C) | 0 | 0 | 0 | 0 |
| 200 (93°C) | 5 (2 N/cm) | 0 | 0 | 0 |
| 210 (99°C) | 30 (11.8 N/cm) | 8 (3.1 N/cm) | 5 (2 N/cm) | 3 (1.2 N/cm) |
| 220 (104°C) | 34 (13.4 N/cm) | 22 (8.7 N/cm) | 18 (7.1 N/cm) | 20 (7.9 N/cm) |
| 230 (110°C) | 32 (12.6 N/cm) | 36 (14.2 N/cm) | 34 (13.4 N/cm) | 36 (14.2 N/cm) |
| 240 (116°C) | 32 (12.6 N/cm) | 34 (13.4 N/cm) | 36 (14.2 N/cm) | 42 (16.5 N/cm) |
| 250 (121°C) | 32 (12.6 N/cm) | 34 (13.4 N/cm) | 40 (15.7 N/cm) | 48 (18.9 N/cm) |

| | | | | |
|---|---|---|---|---|
| * Comparative Example - not an example of present invention | | | | |

### Example 3

This example demonstrates radiation crosslinking performance of LLDPE resins to be used for the core layer of the multi-layer film products with improved heat seal, orientation and shrink performance.

An octene-1 LLDPE copolymer, labeled as Resin D, having I₂ = 0.55 grams/10 minutes, I₁₀/I₂ = 12 and density of about 0.923 g/cm³ was fabricated into 1 mil (.025 mm) thick film using a blown film process. The blown film is made using a STERLING Blown Film Line. This line has a 3.5 inch (8.9 cm) diameter extruder, L/D of 30:1, an 8 inch (20 cm) diameter Western Polymer die with a 70 mil (1.8 mm) die gap, a STERLEX barrier type screw and Internal Bubble Cooling (IBC).

Film samples made from this resin were treated by electron beam radiation using an Energy Science Incorpoated electron beam radiation machine (Model EC200; 200 KeV). The treated polymer film was evaluated for propensity for thermal shrinkage by measuring percent gel (i.e., crosslink density) by the solvent extraction technique as described in Example 2.

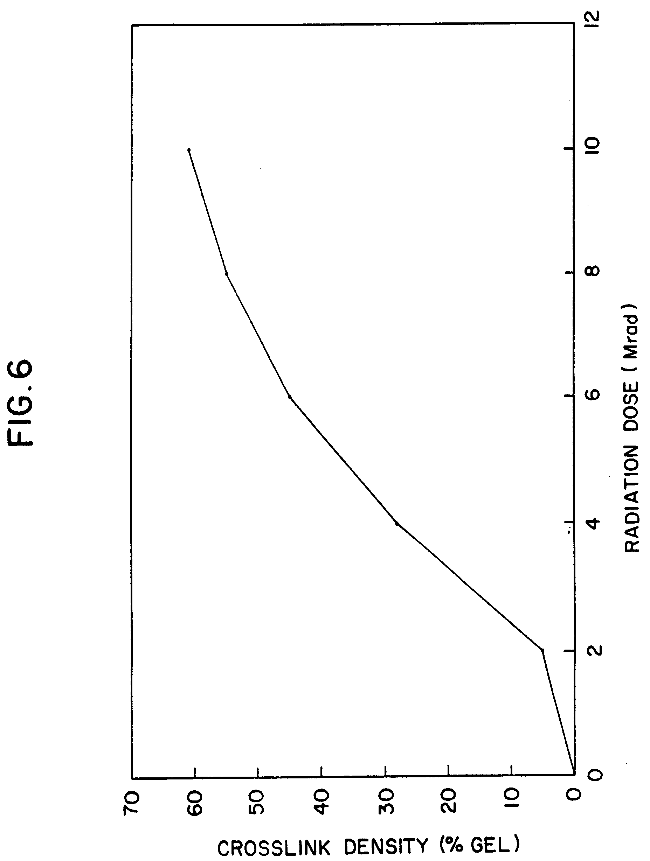

The results are illustrated in Figure 6 and the data are summarized and compared to Resin C in Table 7. The data show that resin D had an enhanced radiation crosslinking efficiency as compared to Resin C (data shown earlier in Example 2, Table 4). Resin D, having I₁₀/I₂ of about 12, had a crosslink density at a dosage of about 3 Mrad of approximately 18 to 20 percent gel, whereas resin C does not attain a cross-link density of about 20 percent gel until exposure to about 7 Mrad. Resin D would, therefore, attain higher shrinkage at lower levels of irradiation than resin C, and is thus an example of this invention for use as a core layer in a multilayer structure.

**TABLE 7**

| Crosslink Density of Resins C and D after Irradiation | | |
|---|---|---|
| Radiation Dose (Mrad) | Crosslink Density (Percent Gel) | |
| | Resin D* | Resin C** |
| 0 | 0 | 0 |
| 2 | 5 | 0 |
| 4 | 28 | 2 |
| 6 | 45 | 15 |
| 8 | 55 | 30 |
| 10 | 61 | 45 |

| | | |
|---|---|---|
| * Comparative Example - not an example of present invention | | |
| ** Inventive Example - Resin C can be used as a heat seal layer in the inventive multilayer film of the invention | | |

### Example 4

This example demonstrates a two layer coextruded film product having improved heat seal, crosslinking and orientation/shrink performance after irradiation to 3 Mrad.

A 1 mil (0.025 mm) thick 2-layer (A/B) coextruded film sample was fabricated by the following blown film process:

Two layer blown films were prepared in accordance with this invention by fabrication on an Egan coextrusion blown film line equipped with a 2.5 inch (6.4 cm) diameter main extruder, a 1.5 inch (3.8 cm) skin layer extruder and a 2 layer single air ring cooled annular die. The multilayer laminated film structure was an A/B configuration in which:
(I) The "A-layer" was the heat seal layer and was extruded through the outer annular die as the outer layer. The "A-layer" extruder was a 1.5 inch (3.8 cm) Egan having an L/D ratio of 20:1. The extruder had four zones temperature control. This extruder was used to feed Resin C- to the outer layer. This layer was maintained at a thickness of approximately 0.15 mils (0.0038 mm). The temperature profile of this extruder was as follows:

| Zone | 1 | 2 | 3 | 4 |
|---|---|---|---|---|
| Temperature (°C) | 190 | 220 | 230 | 220 |

The polymer melt temperature was about 225°C. The throughput rate was about 18 pounds/hour (8.2 kg/hr).
(II) The "B-layer" is the support or core layer and was extruded through the inner annular die as the inside layer. The "B-layer" extruder was a 2.5 inch (6.35 cm) Egan having a screw L/D ratio of 24:1. This extruder is used to feed Resin D to the middle annular die to form the inner layer at a throughput of about 110 pounds/hour (50 kg/hr) and at a melt temperature of about 225°C. The thickness of this layer is approximately 0.85 mils ( 0.022 mm). The temperature profile of this extruder is as follows:

| Zone | 1 | 2 | 3 | 4 |
|---|---|---|---|---|
| Temperature (°C) | 205 | 220 | 230 | 220 |

Resin C described in Example 2 was used to fabricate the heat seal layer and Resin D described in Example 3 was used to fabricate the other layer. The thickness of the heat seal layer is approximately 15 percent of the total film thickness of about 1 mil (0.025 mm). The film sample is irradiated at 3 Mrad using an Energy Science Incorporated electron beam radiation machine (Model EC200). The total crosslink density of the film, measured as percent gel, after the radiation treatment was approximately 16 percent. At crosslink densities of between about 10 percent and about 25 percent, the film is known to have ideal performance for orientation and shrink applications.

The heat seal performance (heat seal layer to heat seal layer) of this co-extruded crosslinked film was evaluated by the method described in Example 1. Table 8 illustrates the heat seal strength of the heat seal layer of film before and after radiation treatment (3 Mrad). The film retained its excellent heat seal performance after the electron beam radiation treatment.

**Table 8**

| Heat Seal Strength of the Heat Seal Layer of Coextruded Film Samples before and after Irradiation | | |
|---|---|---|
| Heat Seal Temperature (°F) ((°C)) | Heat Seal Strength * (Newtons/inch) ((Newton/cm)) | |
| | 0 Mrad | 3 Mrad |
| 180 (82°C) | 0 | 0 |
| 190 (88°C) | 9 (3.5 N/cm) | 8 (3.1 N/cm) |
| 200 (93°C) | 20 (7.9 N/cm) | 20 (7.9 N/cm) |
| 210 (99°C) | 34 (13.4 N/cm) | 36 (14.2 N/cm) |
| 220 (104°C) | 38 (15 N/cm) | 42 (16.5 N/cm) |

| | | |
|---|---|---|
| * Inventive Example - an example of inventive multilayer film | | |

This example illustrates that by using the resins disclosed in this invention for specific layers, a multi-layer film can be made, exposed to radiation and still maintain a combination of excellent core layer crosslinking performance and excellent heat seal layer performance.

The invention is particularly useful in heat-seal packaging of food, whereby the packaged food is exposed to irradiation for sterilization purposes. The irradiation simultaneously strengthens the core layer and prepares it for shrinkage upon subsequent exposure to heat. By using the present invention in the heat seal outer layer, the heat seal initiation temperature of the heat seal layer is maintained after irradiation and the heat seal strength of the package is substantially maintained.

## Claims

1. A multilayer heat-sealable thermoplastic film structure having improved heat seal performance after electron beam irradiation, said film structure comprising at least one heat-sealable outer layer (A) and at least one core layer (B), wherein layer (A) comprises a first linear polyethylene characterized as having:
(a) a density from 0.88 g/cm³ to 0.92 g/cm³,
(b) a melt index, measured as I₂, from 2 g/10 minutes to 20 g/10 minutes,
(c) a molecular weight distribution, measured as I₁₀/I₂, from 5 to 8, and wherein
(d) 15 percent by weight or less of said first linear polyethylene has a degree of branching less than or equal to 2 methyls/1000 carbons, and
(e) 25 percent by weight or less of said first linear polyethylene has a degree of branching equal to or greater than 25 methyls/1000 carbons, and wherein layer (B) comprises a second linear polyethylene
characterized as having:
(f) a density from 0.88 g/cm³ to 0.94 g/cm³,
(g) a melt index, measured as I₂, from 0.05 g/10 minutes to 5 g/10 minutes, and
(h) a molecular weight distribution, measured as I₁₀/I₂, from 8 to 30.

2. The film structure of Claim 1 wherein layer (A) is adjacent to layer (B).

3. The film structure of Claim 1 wherein the first linear polyethylene in layer (A) is a copolymer of ethylene and 1-octene.

4. The film structure of Claim 1 wherein the first linear polyethylene in layer (A) is a copolymer of ethylene and 1-hexene.

5. The film structure of Claim 1 wherein the second linear polyethylene in layer (B) is a copolymer of ethylene and 1-octene.

6. The film structure of Claim 1 wherein the second linear polyethylene in layer (B) is a copolymer of ethylene and 1-hexene.

7. The film structure defined by Claim 1 which has been electron beam irradiated from 0.5 Mrad to 20 Mrad to form an irradiated film structure.

8. The irradiated film structure of Claim 7 wherein the heat-sealable outer layer (A) has a cross-link density of less than 10 percent gel after 5 Mrad radiation dosage or less.

9. The irradiated film structure of Claim 7 wherein the heat-sealable outer layer (A) has a cross-link density of less than 10 percent gel after 4 Mrad radiation dosage.

10. The irradiated film structure of Claim 7 wherein the layer (B) has a cross-link density of at least 30 percent gel after 5 Mrad radiation dosage or less.

11. The irradiated film structure of Claim 7 wherein the layer (B) has a cross-link density of at least 20 percent gel after 4 Mrad radiation dosage.

12. The irradiated film structure of Claim 7 which has been subsequently heat sealed to form an irradiated and heat sealed film structure.

13. The irradiated and heat sealed film structure of Claim 12 wherein said film structure has a heat seal strength of at least 3.9 N/cm (10 Newtons/inch) at a heat seal temperature of at least 91°C (195°F) after electron beam irradiation of 4 Mrad.

14. The irradiated and heat sealed film structure of Claim 13 wherein the heat seal temperature is 93°C (200°F) or less.

15. The film structure of Claim 1 wherein the density of the first linear polyethylene is from 0.89 g/cm³ to 0.915 g/cm³.

16. The film structure of Claim 1 wherein the I₂ of the first linear polyethylene is from 3 g/10 minutes to 10 g/10 minutes.

17. The film structure of Claim 1 wherein the I₁₀/I₂ of the first linear polyethylene is from 6.5 to 8.

18. The film structure of Claim 1 wherein 10 percent by weight or less of said first linear polyethylene has a degree of branching less than or equal to 2 methyls/1000 carbons, and 20 percent by weight or less of said first linear polyethylene has a degree of branching equal to or greater than 25 methyls/1000 carbons.

19. The film structure of Claim 1 wherein the density of the second linear polyethylene is from 0.9 g/cm³ to 0.93 g/cm³.

20. The film structure of Claim 1 wherein the I₂ of the second linear polyethylene is from 0.2 g/10 minutes to 1 g/10 minutes.

21. The film structure of Claim 1 wherein the I₁₀/I₂ of the second linear polyethylene is from 8 to 15.

## Patentansprüche

1. Heißsiegelbare thermoplastische Mehrschichtfolienstruktur mit verbesserter Heißsiegelleistung nach Elektronenbestrahlung, wobei diese Folienstruktur wenigstens eine heißsiegelfähige äußere Schicht (A) und wenigstens eine Kernschicht (B) umfaßt, worin Schicht (A) ein erstes lineares Polyethylen umfaßt, das gekennzeichnet ist durch:
(a) eine Dichte von 0,88 g/cm³ bis 0,92 g/cm³,
(b) einen Schmelzfluß-Index, gemessen als I₂, von 2 g/10 min bis 20 g/10 min,
(c) eine Molekulargewichtsverteilung, gemessen als I₁₀/I₂, von 5 bis 8, und worin
(d) 15 Gew.-% oder weniger dieses ersten linearen Polyethylens einen Verzweigungsgrad weniger als oder gleich 2 Methylgruppen/1000 Kohlenstoffatome haben, und
(e) 25 Gew.-% oder weniger dieses ersten linearen Polyethylens einen Verzweigungsgrad gleich oder größer als 25 Methylgruppen/1000 Kohlenstoffatome haben,
und worin Schicht (B) ein zweites lineares Polyethylen umfaßt,
das gekennzeichnet ist durch:
(f) eine Dichte von 0,88 g/cm³ bis 0,94 g/cm³,
(b) einen Schmelzfluß-Index, gemessen als I₂, von 0,05 g/10 min bis 5 g/10 min, und
(c) eine Molekulargewichtsverteilung, gemessen als I₁₀/I₂, von 8 bis 30.

2. Folienstruktur nach Anspruch 1, worin Schicht (A) angrenzend zu Schicht (B) vorliegt.

3. Folienstruktur nach Anspruch 1, worin das erste lineare Polyethylen in Schicht (A) ein Copolymers von Ethylen und 1-Octen ist.

4. Folienstruktur nach Anspruch 1, worin das erste lineare Polyethylen in Schicht (A) ein Copolymers von Ethylen und 1-Hexen ist.

5. Folienstruktur nach Anspruch 1, worin das zweite lineare Polyethylen in Schicht (B) ein Copolymers von Ethylen und 1-octen ist.

6. Folienstruktur nach Anspruch 1, worin das zweite lineare Polyethylen in Schicht (B) ein Copolymers von Ethylen und 1-Hexen ist.

7. Folienstruktur wie in Anspruch 1 definiert, welche mit Elektronenstrahlen von 0,5 Mrad bis 20 Mrad unter Bildung einer bestrahlten Folienstruktur bestrahlt worden ist.

8. Bestrahlte Folienstruktur nach Anspruch 7, worin die heißsiegelbare äußere Schicht (A) eine Vernetzungsdichte von weniger als 10 % Gel nach einer Bestrahlungsdosis von 5 Mrad oder weniger besitzt.

9. Bestrahlte Folienstruktur nach Anspruch 7, worin die heißsiegelbare äußere Schicht (A) eine Vernetzungsdichte von weniger als 10 % Gel nach einer Bestrahlungsdosis von 4 Mrad besitzt.

10. Bestrahlte Folienstruktur nach Anspruch 7, worin die Schicht (B) eine Vernetzungsdichte von wenigstens 30 % Gel nach einer Bestrahlungsdosis von 5 Mrad oder weniger besitzt.

11. Bestrahlte Folienstruktur nach Anspruch 7, worin die Schicht (B) eine Vernetzungsdichte von wenigstens 20 % Gel nach einer Bestrahlungsdosis von 4 Mrad besitzt.

12. Bestrahlte Folienstruktur nach Anspruch 7, welche anschließend unter Bildung einer bestrahlten und heißgesiegelten Folienstruktur heißgesiegelt wurde.

13. Bestrahlte und heißgesiegelte Folienstruktur von Anspruch 12, worin diese Folienstruktur eine Heißsiegelfestigkeit von wenigstens 3,9 Newton/cm (10 Newtons/inch) und eine Heißsiegeltemperatur von wenigstens 91° C (195° F) nach Elektronenbestrahlung von 4 Mrad aufweist.

14. Bestrahlte und heißgesiegelte Folienstruktur von Anspruch 13, worin die Heißsiegeltemperatur 93° C (200° F) oder weniger beträgt.

15. Folienstruktur nach Anspruch 1, worin die Dichte des ersten linearen Polyethylens von 0,89 g/cm³ bis 0,915 g/cm³ beträgt.

16. Folienstruktur nach Anspruch 1, worin I₂ des ersten linearen Polyethylens von 3 g/10 min bis 10 g/10 min beträgt.

17. Folienstruktur nach Anspruch 1, worin der Wert I₁₀/I₂ des ersten linearen Polyethylens von 6,5 bis 8 beträgt.

18. Folienstruktur nach Anspruch 1, worin 10 Gew.-% oder weniger dieses ersten linearen Polyethylens einen Verzweigungsgrad von weniger als oder gleich 2 Methylgruppen/1000 Kohlenstoffatomen haben und 20 Gew.-% oder weniger dieses ersten linearen Polyethylens einen Verzweigungsgrad gleich oder größer als 25 Methylgruppen/1000 Kohlenstoffatome haben.

19. Folienstruktur nach Anspruch 1, worin Dichte des zweiten linearen Polyethylens von 0,9 g/cm³ bis 0,93 g/cm³ beträgt.

20. Folienstruktur nach Anspruch 1, worin I₂ des zweiten linearen Polyethylens von 0,2 g/10 min bis 1 g/10 min beträgt.

21. Folienstruktur nach Anspruch 1, worin der Wert I₁₀/I₂ des zweiten linearen Polyethylens von 8 bis 15 beträgt.

## Revendications

1. Structure de film thermoplastique multicouche thermosoudable, présentant des performances de soudage à chaud améliorées après irradiation par un faisceau d'électrons, ladite structure de film comprenant au moins une couche externe thermosoudable (A) et au moins uns couche centrale (B), la couche (A) comprenant un premier polyéthylène linéaire, caractérisée par :
(a) une densité de 0,88 g/cm³ à 0,92 g/cm³,
(b) un indice de fluidité à l'état fondu, mesuré dans les conditions correspondant à I₂, de 2 g/10 minutes à 20 g/10 minutes,
(c) une distribution de masse moléculaire, mesurée par le rapport I₁₀/I₂, de 5 à 8, et dans lequel :
(d) 15% en poids ou moins dudit premier polyéthylène linéaire présentent un degré de ramification inférieur ou égal à 2 méthyles/1000 carbones, et
(e) 25% en poids ou moins dudit premier polyéthylène linéaire présentent un degré de ramification égal ou supérieur à 25 méthyles/1000 carbones,
et la couche (B) comprenant un second polyéthylène linéaire,
caractérisé par :
(f) une densité de 0,88 g/cm³ à 0,94 g/cm³,
(g) un indice de fluidité à l'état fondu, mesuré dans les conditions correspondant à I₂, de 0,05 g/10 minutes à 5 g/10 minutes, et
(h) une distribution de masse moléculaire, mesurée par le rapport I₁₀/I₂, de 8 à 30.

2. Structure de film selon la revendication 1, dans laquelle la couche (A) est adjacente à la couche (B).

3. Structure de film selon la revendication 1, dans laquelle le premier polyéthylène linéaire de la couche (A) est un copolymère d'éthylène et de 1-octène.

4. Structure de film selon la revendication 1, dans laquelle le premier polyéthylène linéaire de la couche (A) est un copolymère d'éthylène et de 1-hexène.

5. Structure de film selon la revendication 1, dans laquelle le second polyéthylène linéaire de la couche (B) est un copolymère d'éthylène et de 1-octène.

6. Structure de film selon la revendication 1, dans laquelle le second polyéthylène linéaire de la couche (B) est un copolymère d'éthylène et de 1-hexène.

7. Structure de film selon la revendication 1, qui a été irradiée par un faisceau d'électrons, à une dose de 0,5 Mrad à 20 Mrad, pour la formation d'une structure de film irradiée.

8. Structure de film irradiée selon la revendication 7, dans laquelle la couche externe thermosoudable (A) présente une densité de réticulation inférieure à 10% de gel après exposition à une dose de radiations de 5 Mrad ou moins.

9. Structure de film irradiée selon la revendication 7, dans laquelle la couche externe thermosoudable (A) présente une densité de réticulation inférieure à 10% de gel après exposition à une dose de radiations de 4 Mrad.

10. Structure de film irradiée selon la revendication 7, dans laquelle la couche (B) présente une densité de réticulation d'au moins 30% de gel après exposition à une dose de radiations de 5 Mrad ou moins.

11. Structure de film irradiée selon la revendication 7, dans laquelle la couche (B) présente une densité de réticulation d'au moins 20% de gel après exposition à une dose de radiations de 4 Mrad.

12. Structure de film irradiée selon la revendication 7, qui a été ensuite thermosoudée pour former une structure de film irradiée et thermosoudée.

13. Structure de film irradiée et thermosoudée selon la revendication 12, qui présente une résistance de soudure à chaud d'au moins 3,9 N/cm (10 Newtons/inch) à une température de soudage à chaud d'au moins 91°C (195°F), après une irradiation de 4 Mrad par un faisceau d'électrons.

14. Structure de film irradiée et thermosoudée selon la revendication 13, pour laquelle la température de soudage à chaud est de 93°C (200°F) ou moins.

15. Structure de film selon la revendication 1, pour laquelle la densité du premier polyéthylène linéaire est de 0,89 g/cm³ à 0,915 g/cm³.

16. Structure de film selon la revendication 1, pour laquelle le I₂ du premier polyéthylène linéaire est de 3 g/10 minutes à 10 g/10 minutes.

17. Structure de film selon la revendication 1, pour laquelle le rapport I₁₀/I₂ du premier polyéthylène linéaire est de 6,5 à 8.

18. Structure de film selon la revendication 1, pour laquelle 10% en poids ou moins dudit premier polyéthylène linéaire présentent un degré de ramification inférieur ou égal à 2 méthyles/1000 carbones, et 20% en poids ou moins dudit premier polyéthylène linéaire présentent un degré de ramification égal ou supérieur à 25 méthyles/1000 carbones.

19. Structure de film selon la revendication 1, pour laquelle la densité du second polyéthylène linéaire est de 0,9 g/cm³ à 0,93 g/cm³.

20. Structure de film selon la revendication 1, pour laquelle le I₂ du second polyéthylène linéaire est de 0,2 g/10 minutes à 1 g/10 minutes.

21. Structure de film selon la revendication 1, pour laquelle le rapport I₁₀/I₂ du second polyéthylène linéaire est de 8 à 15.
